(19) Europäisches Patentamt

European Patent Office

Office européen des brevets

(11) **EP 1 260 797 A2**

(12) **EUROPEAN PATENT APPLICATION**

(43) Date of publication:
27.11.2002 Bulletin 2002/48

(51) Int Cl.$^7$: **G01F 1/58**

(21) Application number: 02252922.6

(22) Date of filing: 25.04.2002

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **25.04.2001 GB 0110175**

(71) Applicant: **ABB Metering Limited
Luton, Bedfordshire LU1 3LJ (GB)**

(72) Inventors:
• **Jin, Wu c/o ABB Metering Limited
Bedfordshire, LU1 3LJ (GB)**
• **Evans, Michael c/o ABB Metering Limited
Bedfordshire, LU1 3LJ (GB)**
• **Gregg, David c/o ABB Metering Limited
Bedfordshire LU1 3LJ (GB)**

(74) Representative: **Moir, Michael Christopher et al
Mathys & Squire
100 Gray's Inn Road
London WC1X 8AL (GB)**

(54) **Flow meter**

(57) A flow meter comprising means for receiving a flow of fluid diverted from a mains supply through an inlet and supplying the flow to first fluid conveying means for conveying the flow of fluid to a flow measurement duct, the direction of the flow being reversed in said first fluid conveying means, means for generating a magnetic field across the duct, means for deriving a flow measurement from the voltage induced by said magnetic field in the fluid, and second fluid conveying means for conveying fluid from the measurement duct back to the mains supply through an outlet adjacent said inlet As the meter includes no moving parts, the lifetime of the meter can be significantly longer than that of a displacement meter having an oscillating piston.

*Fig. 1*

## Description

The present invention relates to a fluid flow meter, in particular to a water meter primarily, but not exclusively, designed for domestic applications.

A known positive displacement flow meter comprises an eccentric piston oscillating within a chamber which has inlet and outlet ports. The inlet port receives a flow of fluid from the mains supply, the flow being returned to the mains supply via the outlet. Such meters operate on the volumetric principle that for each revolution of the piston a fixed amount of water is measured. The piston moves circumferentially about the axis of the chamber and sweeps a known volume as fluid passes from the inlet to the outlet port. A magnetic or other external connecting element is rotationally driven by the piston through a drive coupling in the form of a peg or post on the piston engaging a radial arm of the connecting element which rotates about the chamber axis to drive an external register.

Displacement flow meters may be interposed between flanged upstream and downstream portions of a supply pipe or other fluid line so that the flow of fluid in the pipe flows directly through the meter. Alternatively, displacement flow meters may be connected to a manifold connector which diverts the flow of fluid from the supply pipe to the meter, and returns the flow of fluid to the supply pipe. Such "manifold" type meters are easier to install and replace than the "through-flow" type meters because only a single joint with the manifold connector needs to be broken.

The lifetime of displacement flow meters is short, due to wear of the moving parts of the meter. Any wear tends to cause the accuracy of the measurement of the amount of fluid passing through the meter to deteriorate. As a result, German law requires displacement flow meters to be replaced 6 years after installation.

It is an object of at least the preferred embodiment of the present invention to provide a manifold type flow meter which has an improved service life.

In a first aspect the present invention provides a flow meter comprising first fluid conveying means for receiving a flow of fluid from a manifold connector disposed in a mains supply pipe through an inlet, and delivering the flow to a flow measurement duct, means for generating a magnetic field across the duct, means for deriving a flow measurement from a voltage induced by said magnetic field across the fluid, or a quantity indicative of said voltage, and second fluid conveying means for conveying fluid from the measurement duct back to the manifold connector through an outlet adjacent said inlet.

As there are no moving parts in the electromagnetic flow meter, the lifetime of the flow meter is anticipated to be in excess of 20 years, compared to the lifetime of 6 years of displacement flow meters, thus providing a substantial increase to the lifetime of a manifold type flow meter.

Hitherto, electromagnetic flow meters have been provided only in the form of a "through-flow" type. Such a flow meter is described in our International patent application no WO 98/49528, the contents of which are incorporated herein by reference.

Some forms of manifold may generate complicated flow conditions which result in pressure head losses. These losses can cause cavitation and reduce the accuracy of measurement of the flow rate. Therefore in a preferred form of meter according to the invention, the first conveying means is configured to deliver the flow substantially cavitation-free to the flow measurement duct.

Preferably, the first fluid conveying means reverses the direction of flow of the fluid. Configuring the first conveying means to avoid cavitation of the measuring duct then is particularly advantageous.

Preferably, the flow meter comprises an annular inlet chamber for receiving the flow of fluid from the manifold connector and supplying the flow of fluid to the first conveying means. The second conveying means may pass through the inlet chamber to return fluid to the manifold connector. This can provide a compact structure for receiving a flow of fluid from, and returning the flow of fluid to, the manifold connector. The second conveying means is preferably divergent in order to reduce the flow velocity of the fluid and improve hydrodynamic consistency of the fluid as it leaves the meter. This can prevent fluid from "rebounding" back into the manifold connector from the wall of the mains supply as it is returned to the mains supply.

Preferably, the annular inlet chamber comprises guide means for guiding the flow of fluid towards said first conveying means so as to reduce turbulence in the inlet chamber. In one embodiment, the guide means comprises a fin projecting from the internal wall of said chamber opposite said first conveying means. By minimising turbulence in the inlet chamber, any loss in momentum of the fluid and fluctuation in flow rate due to the turbulence is also minimised, thus minimising errors in the rate of fluid flow measured by the meter.

The internal wall of the inlet chamber is preferably chamfered to guide the flow of fluid towards said first conveying means. By forming, for example, a channel or groove around the edge of the upper internal surface of the inlet chamber, turbulence in the inlet chamber can be further minimised.

Preferably, the meter comprises means for mounting the meter on the manifold connector so that the flow axis of the flow measurement duct is substantially orthogonal to the longitudinal extent of the mains supply.

In a preferred embodiment, the first conveying means comprises a substantially U-shaped tube. This can enable the flow meter to be built to substantially the same size as a displacement manifold type flow meter.

The measurement duct may comprise an upstream convergent Venturi portion for channelling the flow of fluid into the flow measurement duct, the convergent portion being of length sufficient to suppress cavitation occurring in the first fluid conveying means, preferably to allow flow to develop without cavitation. As the fluid flows through the U-shaped tube, the variation in the angular velocity of the fluid flowing around the bend of the tube can, for high flow rates, create localised pressure differences in the fluid, which can result, in severe cases, in cavitation in the fluid. In order to minimise the likelihood of any cavitation, the length of the upstream convergent portion is chosen to provide the longest possible "run-in" for the fluid from the bend into the measurement portion. This can enable the flow of fluid to be properly developed before reaching the measurement portion. The convergence increases the mean velocity of the fluid flow through the measurement portion, thus increasing the strength of the electromagnetically induced signal.

The second fluid conveying means preferably comprises a divergent Venturi portion for receiving the flow of fluid from said flow measurement duct, said upstream convergent portion being substantially longer than said downstream divergent portion.

The upstream convergent portion is preferably approximately three times longer than said downstream divergent portion. The flow measurement duct is preferably of substantially rectangular cross-section.

Thus, in another aspect, the present invention provides a flow meter for mounting on a manifold connector in a supply pipe, the meter comprising an annular inlet portion for receiving a flow of fluid from the manifold connector, a conduit including a U-tube connecting the inlet portion to an elongate convergent Venturi section, a flow measurement duct, means for inferentially measuring a flow of fluid through the measurement duct, and a divergent Venturi section for receiving the flow of fluid from the measurement duct and returning it to the manifold connector via an outlet portion disposed within the annular inlet portion.

The conduit is preferably of substantially constant flow area. The outlet portion is preferably divergent in the direction of flow. The inferential measuring means preferably comprises means for generating a magnetic field across the measuring duct and means for deriving a flow measurement from a voltage induced by said magnetic field across the fluid, or a quantity indicative of said voltage.

In a preferred embodiment the meter comprises a lower housing configured for mounting on the manifold connector by rotation relative thereto and an upper housing connected to the lower housing.

The upper housing can house a battery for supplying power to the meter and drive circuitry for driving the generating means, and the means for deriving a flow measurement from the voltage induced by said magnetic field in the fluid. The lower housing can house the measurement duct and generating means.

Typically, the manifold connector is internally threaded to engage an external thread of the lower housing to connect the meter to the mains supply. A snap-fit connection is typically provided to connect the upper and lower housing of the meter, the end of the upper housing being slid over an O-ring located on the lower housing to provide a water tight seal between the housings. During either installation of the meter, or subsequent removal of the meter from the manifold connector, the upper housing is gripped and twisted to unscrew the meter from the manifold connector. This can result in excessive torque being applied to the snap-fit connection between the upper and lower housings of the meter by the installer, which can in turn result in damage to, or even breaking of, the casing of the meter,

To avoid this problem, in a preferred embodiment the upper housing is slidably removable from the lower housing and connected thereto by structure capable of transmitting torque to the lower housing for rotating the lower housing. In a preferred arrangement the casing comprises one or more dovetails provided on one of the upper and lower housing for slidably locating into corresponding recesses provided in the other of the upper and lower housings. Thus, the upper housing can be easily disconnected from the lower housing without damaging the meter and can transmit torque to the lower housing for rotating the lower housing.

Preferably, the generating means comprises at least one coil and charging means for charging the coil from an energy supply to generate said magnetic field. In an electromagnetic flow meter, as fluid flows through the measurement duct a voltage is induced in the fluid subjected to the magnetic flux in a direction orthogonal to both the direction of fluid flow and the magnetic flux. The induced voltage $V_s$ is detected by a pair of electrodes disposed in the flow duct, where $V_s$ is related to the intensity of the flux density $B$ and the velocity $v$ of fluid flowing in the duct by the expression

$$V_s = S.B.v.d$$

where $d$ is the separation of the electrodes and S is a sensitivity factor dependent upon the geometry of the flow tube. By measuring the magnitude and polarity of the induced voltage $V_s$, the magnitude and direction of the velocity of the flow of fluid through the flow tube, and therefore the flow rate, may be calculated.

Accordingly, it is important that the magnitude of the flux density $B$ remains constant, as any fluctuations in the magnitude of the flux density $B$ will alter the calculated flow rate. Fluctuation in the flux density $B$ can be caused by a fluctuation in the voltage $V_{cc}$ supplied to the coil from the meter's power supply, typically a battery. As the voltage supplied by the battery can vary between 2.7V and 3.6V depending on the ambient temperature and the life of the battery, a voltage regulator is typically provided between the battery and the coil so as to ensure that a steady voltage is supplied to the coil. However, use of such a voltage regulator, for example, a DC/DC converter, can reduce the energy efficiency of the meter by as much as 30-40%. Therefore, it is an object of at least the preferred embodiment of the invention to provide a flow meter which does not require a voltage regulator to ensure that the magnitude of the flux density *B* remains constant.

In a preferred embodiment, the flow meter comprises charging control means for adjusting the charging of the coil in response to variations in an unregulated energy supply so as to maintain the magnitude of magnetic flux density across the duct substantially level during measurement of the flow. Thus, the present invention also provides a flow meter comprising a flow measurement duct, generating means for generating a magnetic field across the duct, and means for deriving a flow measurement from a voltage induced in fluid flowing in the duct, or a quantity indicative thereof, wherein the generating means comprises at least one coil, charging means for charging the coil from an unregulated energy supply to generate said magnetic field, and charging control means for adjusting the charging of the coil in response to variations in the energy supply so as to maintain the magnitude of magnetic flux density across the duct substantially constant during measurement of the flow. Accordingly, the use of voltage regulators can be avoided, thus further increasing the energy efficiency of the meter.

In a preferred embodiment, the charging control means is arranged to adjust the charging of the coil from the energy supply so as to control the size of the hysteresis loop, that is, the variation of flux density with magnetic field, generated as the coil is charged. This can provide a convenient way to compensate for any variation in the magnetic field due, for example, an increase in the current in the coil. Preferably, the charging control means is arranged to control the size of the hysteresis loop by controlling the magnitude of the maximum current in the coil during charging thereof.

Preferably the charging control means is arranged to measure the time taken, during charging, for the current in the coil to reach a predetermined level, and to control the duration of the remainder of the charging time in order to control the magnitude of the maximum current in the coil.

Preferably the charging control means is arranged to control said charging means so that, during an initial charging period, the coil is continuously charged from the energy supply and, during a subsequent measuring period, the coil is intermittently charged from the energy supply, so as to maintain a substantially constant mean flux density. This can avoid the use of voltage boosters to provide a transient increase in the energy supplied to the coil in order to establish rapidly the magnetic field. Thus, the present invention also provides a flow meter comprising a flow measurement duct, generating means for generating a magnetic field across the duct, and means for deriving a flow measurement from a voltage induced in fluid flowing in the duct, or a quantity indicative thereof, wherein the generating means comprises at least one coil, charging means for charging the coil from an energy supply to generate said magnetic field, and charging control means for controlling said charging means so that, during an initial charging period, the coil is continually charged from the energy supply and, during a subsequent measuring period, the coil is intermittently charged from the energy supply. Preferably, the current in the coil reaches a maximum at the end of said initial period, said charging control means being arranged to control the duration of said initial period so as to control the size of the hysteresis loop generated as the coil is charged. Thereby it is possible to compensate for variations in the energy supply and maintain the magnitude of magnetic flux density across the duct at a substantially constant level. In a preferred embodiment the charging means comprises a switching circuit having a plurality of switches, said charging control means being arranged to control the sequence of operating said switches so as to control the duration of said initial period.

The flow meter preferably comprises a battery as the unregulated energy supply for charging said coil.

Preferably the charging control means is arranged to control said charging means to commutate the current supplied to the coil to generate the magnetic field in alternating directions. By creating a bi-directional field, an equilibrium in polarisation is established, and hence any ionisation and electrochemical influences acting on the electrodes can be prevented.

Preferably, the charging means comprises a switching circuit having a plurality of switches, said charging control means being arranged to control the sequence of operating said switches so as to suppress voltage fluctuation across the coil during commutation. The applicants have observed that voltage fluctuation across the coil during commutation can be suppressed by controlling the sequence of operating, that is. opening and closing, the switches of the switching circuit.

Thus, in another aspect the present invention provides a flow meter comprising a flow measurement duct, generating means for generating a magnetic field across the duct, and means for deriving a flow measurement from a voltage induced in fluid flowing in the duct, wherein the generating means comprises at least one coil, charging means for charging the coil from an energy supply to generate said magnetic field, and charging control means for controlling said charging means, wherein said charging means comprises a switching circuit having a plurality of switches and said charging control means is arranged to control the sequence of operating said switches so as to suppress voltage fluctuation across the coil during commutation.

Preferably, when a first of said switches is to be opened and a second of said switches is to be closed substantially simultaneously, the charging control means is arranged to open said first switch before closing said second switch. In other words, the timing sequence is "off first then on".

Preferably, when a plurality of switches are to be opened substantially simultaneously, said charging control means is arranged to open first the last of those switches to have been closed. In other words, the timing sequence is "first on last off".

Preferably, the charging control means is arranged to control the sequence of operating said switches such that the coil is sequentially charged by the current supplied thereto from the energy supply and discharged in isolation from the energy supply. Such a cyclic operation of the coil can enable a pseudo-steady current to be developed in the coil to maintain the flux density $B$ at a constant level during measurement of the flow rate through the duct.

During charge and discharge, the magnetic field the current $I$ in the coil varies exponentially with time $t$, and takes the form

$$I = I_m + (I_0 - I_m)e^{-t/\tau}$$

where $I_m$ is the "aiming" current, given by the ratio of the supply voltage $V_{cc}$ and the resistance $R$ of the coil circuit, $I_0$ is the initial current at the start of the charge/discharge period, and $\tau$ is time constant of the coil circuit, given by the ratio of the inductance $L$ and resistance $R$ of the coil circuit.

In order to minimise the rate of decrease of the current in the coil during the discharging of the coil, and therefore minimise energy dissipation from the coil during discharging, preferably the coil is discharged through a loop comprising a plurality of closed switches of the switching circuit. This minimises the voltage across the coil, thus reducing $(I_0 - I_m)$ to a minimum and consequently minimising the rate of current discharge.

Thus, the present invention also provides a flow meter comprising a flow measurement duct, generating means for generating a magnetic field across the duct, and means for deriving a flow measurement from a voltage induced in fluid flowing in the duct, or a quantity indicative thereof, wherein the generating means comprises at least one coil, charging means for charging the coil from an energy supply to generate said magnetic field, and charging control means for controlling said charging means, wherein said charging means comprises a switching circuit having a plurality of switches and said charging control means is arranged to control the sequence of operating said switches so the coil is sequentially charged from the energy supply and discharged in isolation from the energy supply through a loop comprising a plurality of closed switches.

Preferably, the switching circuit is an H-bridge circuit, one of said switches being located on each arm of the circuit.

Another aspect of the present invention provides a method of detecting the presence of a leak of fluid from a mains supply, comprising the steps of:

measuring the amount of fluid used by each of a plurality of consumers during a time period; measuring the actual amount of fluid drawn from the fluid supply during that time period; and comparing the sum of the measured amounts of fluid used by the plurality of consumers to the actual amount of fluid drawn from the mains supply during that time period to determine whether there is a leak of fluid from the mains supply.

The method preferably comprises the steps of:

allocating to each of a plurality of consecutive time periods one of a plurality of priorities; storing, for each priority, the total amount of fluid used by each consumer during the time periods allocated that priority; monitoring the stored amounts of fluid used by the consumers to determine for each priority the sum of the amounts of fluid used from the mains supply by all of the consumers during the time periods allocated that priority; and comparing, for at least one priority, the sum of the amounts to the actual amount of fluid drawn from the mains supply during the time periods allocated that priority to detect the presence of a leak of fluid from the mains supply.

Preferred features of the present invention will now be described, by way of example only, with reference to the accompanying drawings in which:

Figure 1 is a cross-sectional side view of part of an embodiment of a flow meter;

Figure 2 is a cross-sectional side view along line A-A in Figure 1;

Figure 3 illustrates a mechanism for securing upper and lower parts of a flow meter;

Figure 4 is a circuit diagram for the flow meter;

Figure 5 illustrates the flow of current $I$ during a charging/discharging cycle;

Figure 6 illustrates the variation of the current $I$ in the coil of the flow meter with time;

Figure 7 illustrates the variation of current $I$ in the coil during intermittent charging of the coil;

Figure 8 illustrates a hysteresis loop for the coil;

Figure 9 illustrates the influence of the magnitude of the voltage supply, $V_{cc}$, on $I$ during intermittent charging;

Figure 10 illustrates the influence of $V_{cc}$ on the charging rate of the coil;

Figure 11 illustrates the influence of $V_{cc}$ on the mean current in the coil;

Figure 12 illustrates the shift in the operating point on the hysteresis loop with varying mean current in the coil;

Figure 13 illustrates the variation of the flux density $B$ with $V_{cc}$;

Figure 14 illustrates the influence of the size of the hysteresis curve on the mean current; and

Figure 15 illustrates a switching operation for the switches of the switching circuit.

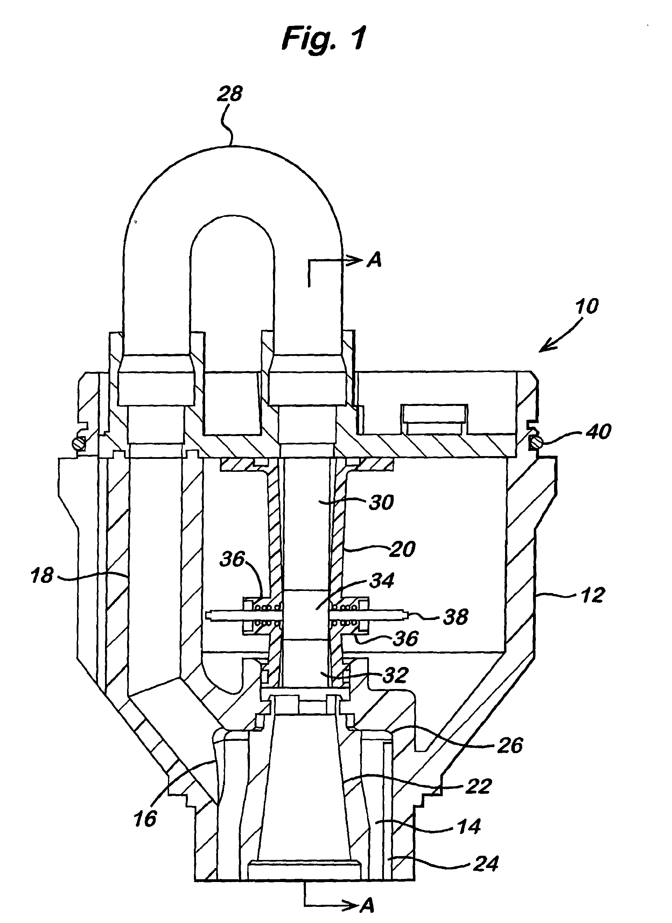

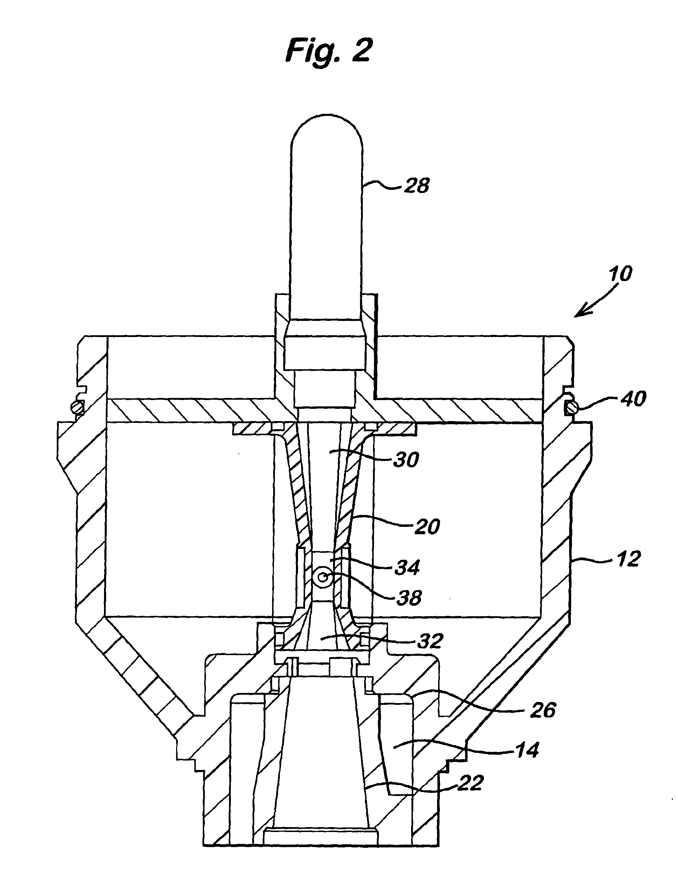

Referring to Figures 1 and 2 a flow meter 10 according to a preferred embodiment of the present invention comprises a plastics meter body 12 having an annular inlet chamber 14 for receiving a flow of fluid diverted to the meter from a mains supply, or supply pipe, by a manifold connector (not shown). The inlet chamber 14 has an outlet 16 for supplying the flow of fluid to a first conveying pipe 18 for conveying the flow of fluid to a measurement duct 20. After passing through the measurement duct 20, the flow of fluid is returned to the manifold connector, and so back to the mains supply by a second conveying pipe 22 passing through the inlet chamber 14, so that the inlet to the meter is adjacent the outlet from the meter to provide a compact structure of the meter. The second conveying pipe is divergent from the measurement duct to the mains supply in order to reduce the velocity of the fluid as it leaves the meter and also provide better hydrodynamic consistency. This can prevent fluid from "rebounding" back into the manifold connector from the wall of the mains supply as it is returned to the mains supply.

The inlet chamber 14 is designed to guide the flow of fluid received from the manifold connector to the outlet 16 in order to minimise turbulence in the inlet chamber before the fluid flow is supplied to the first conveying pipe 18. Any turbulent mixing of the fluid in the inlet chamber can reduce the momentum of the fluid in the meter, dissipating energy from the fluid in the form of heat and increasing the pressure drop across the meter. In order to minimise any loss in momentum of the fluid in the inlet chamber, the inlet chamber 14 includes a fin 24 projecting from the internal wall of the inlet chamber 14 opposite the outlet 16. The fin 24 acts to reduce the tendency of fluid to "spin" in the inlet chamber by effectively splitting the flow of fluid into two as it hits the fin 24. This has the effect of guiding the flow of fluid towards the outlet 16. In addition, the internal wall of the inlet chamber 14 is chamfered, as shown at 26, to assist in guiding the flow of fluid to the outlet 16.

The first conveying pipe 18 includes a substantially U-shaped tube 28 for reversing the flow of fluid to convey it to the measurement duct 20. The tube 28 enables the flow meter 10 to be built to substantially the same size as a displacement flow meter whilst enabling the distance that the fluid flows between the inlet chamber 14 and the measurement duct 20 to be maximised to maximise the development of the profile of the flow of fluid as it enters the measurement duct 20.

The measurement duct 20 comprises a tapered non-magnetic, non-conducting, non-permeable tube, for example, of a plastics material preferably treated to render it impervious to water seepage under pressure. The measurement duct is shaped to aid flow profile development therethrough for a range of fluid flow rates in the duct 20 with minimum variation in the pressure of the fluid leaving the measurement duct at the outlet to the second conveying pipe 22. The duct 20 is in the form of a Venturi tube, having a circular cross-section at its inlet and outlet ends, blended by contraction (converging) and diffusion (diverging) portions 30,32 to an intermediate portion 34 of rectangular cross-section through which the rate of flow of fluid through the meter is determined. The rectangular shape of the portion 34 also promotes a flow regime which is relatively uniform across its width (apart from boundary layer effects) for a wide range of flow rates leading to a more nearly linear calibration characteristic for the meter.

As the fluid flows through the U-shaped tube 28 to the measurement duct 20, the variation in the angular velocity of the fluid flowing around the bend of the tube 28 can, for high flow velocities of up to 15m/s, create localised pressure differences in the fluid, which can result, in severe cases, in cavitation of the fluid. In order to minimise the likelihood of any cavitation voids reaching the measurement duct, the upstream convergent portion 30 is longer, preferably approximately three times longer, than the downstream divergent portion 32 so as to provide the longest possible "run-in" for the fluid from the bend into the intermediate portion 34. This can enable, even in the most extreme cases, the profile of the flow of fluid to be properly developed before reaching the intermediate portion 34 where the flow rate is measured.

A pair of electrode housings 36 are provided in the measurement duct 20, one electrode 38 being disposed in each electrode housing 36 so that the electrodes are disposed orthogonally across the direction of flow of fluid in the measurement duct 20. The electrodes may be formed from any suitable non-contaminating conducting material, such as stainless steel, plated copper or brass. The electrodes 38 may have rectangular, elliptical or a circular cross-section. The material from which the electrodes are formed may be subjected to cleansing and surface treatments, such as passivation, to permit the formation of a uniform oxide layer on the contact surface of the electrodes exposed to the fluid flowing in the measurement duct 20. Such surface treatments can reduce the susceptibility of the electrodes to electrochemical effects such as polarisation, and ensure a consistent electrode impedance from meter to meter.

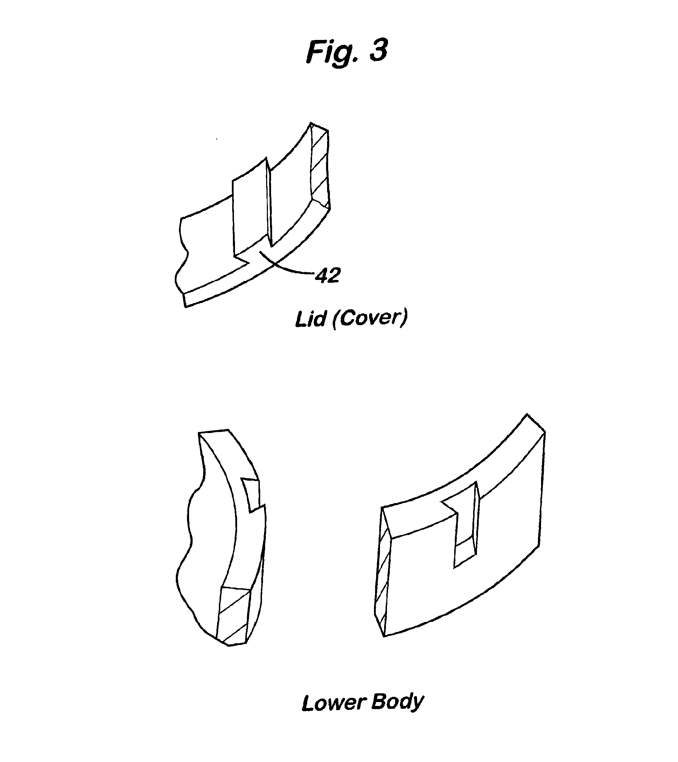

To enable the meter to be connected to the manifold, the manifold connector is internally threaded to engage an external thread (not shown) on the body 12 to connect the meter to the manifold. The meter 10 further includes an upper portion or cap (not shown) releasably secured to the body 12 over an O-ring 40 located in a recess at the upper end of the body 12. The cap houses a battery for supplying power to the meter, a coil driver circuit for driving a coil for generating a magnetic field across the intermediate portion of the measurement duct 20, signal processing circuitry and a display. With reference to Figure 3,one or more dovetails 42 are provided on the cap for slidably locating corresponding recesses in the body 12 as the cap is connected to the body. This enables torque to be transmitted from the cap to the lower housing for rotating the lower housing without damaging the cap.

The magnetic circuit for generating the magnetic field across the intermediate portion of the measurement duct 20 will now be described. The magnetic circuit is similar to that described in our International patent application no. WO 98/49528, the contents of which are incorporated herein by reference, and therefore will not be explained in detail here. In overview, the magnetic circuit comprises a pair of magnetic pole pieces having an enlarged face portion for directing magnetic flux across the measurement duct, specifically by channelling flux on to a plane perpendicular to the direction of flow of fluid in the measurement duct 20. The magnetic field is generated by energising the magnetic circuit by one or more excitation coils connected to the pole pieces and driven by a coil drive circuit. This is described in more detail below

The coil drive circuit is adapted to supply current with alternating polarity cyclically to the coils, thus creating a bi-directional (alternating) magnetic field orthogonal to the fluid flow in the measurement duct 24. By creating an alternating field, any ionisation and electrochemical influences acting on the electrodes can be prevented; with a unidirectional magnetic field in the measurement duct the voltage induced between the electrodes also is unidirectional. As a result particles in the fluid are polarised and tend to adhere to the surface of the electrodes, which can lead over time to partial or complete blockage of the duct, creating measurement errors and premature meter failure.

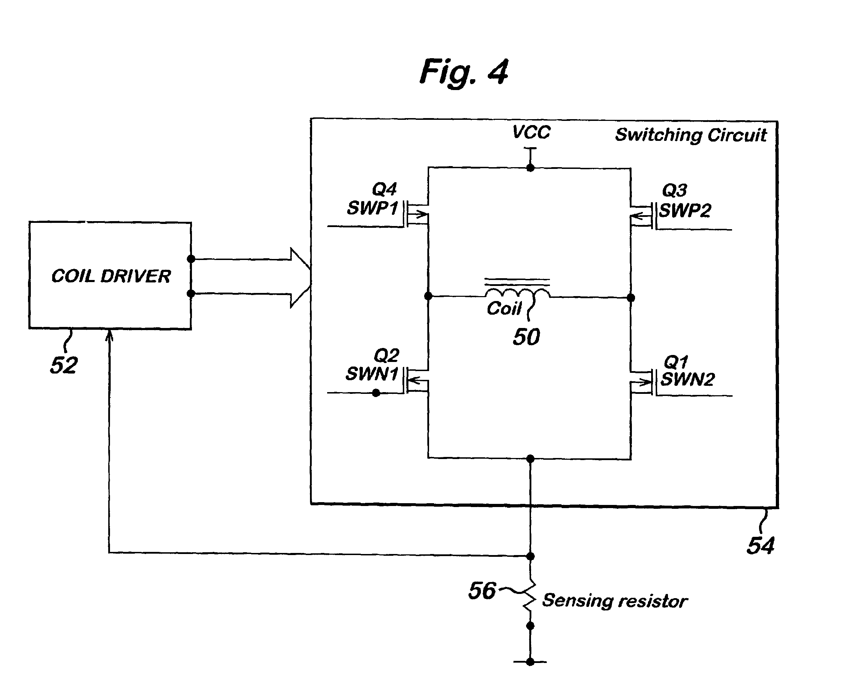

Figure 4 illustrates a circuit diagram for the flow meter. The circuit includes at least one excitation coil 50 having a core made from soft magnetic material, and, for each coil, a coil driver circuit 52, a switching circuit 54 in the form of an H-bridge circuit having a switch on each arm thereof, and resistor 56. The switching circuit 54 receives a voltage $V_{cc}$ supplied from the battery and supplies excitation current to the coil 50. The driver circuit 52 controls the operational sequence (opening/closing) of the switches of the switching circuit 54.

As mentioned above, during each cycle a unidirectional magnetic field is established across the measurement duct 20. The operation of the coil driver circuit 52 to establish the magnetic field during a single cycle will now be described.

Each cycle is typically of duration 20ms and comprises an initial charging phase, during which the coil 50 is charged continuously from the supply voltage $V_{cc}$, and a subsequent measuring phase during which the coil is repeatedly charged and then allowed to discharge on a 8kHz time base. During charging, the current $I$ in the coil varies exponentially with time $t$, and takes the form

$$I = I_m + (I_0 - I_m)e^{-t/\tau}$$

where $I_m$ is the "aiming" current, given by the ratio of the supply voltage $V_{cc}$ and the resistance $R$ of the coil circuit, $I_0$ is the initial current, and $\tau$ is time constant of the coil circuit, given by the ratio of the inductance $L$ and resistance $R$ of the coil circuit.

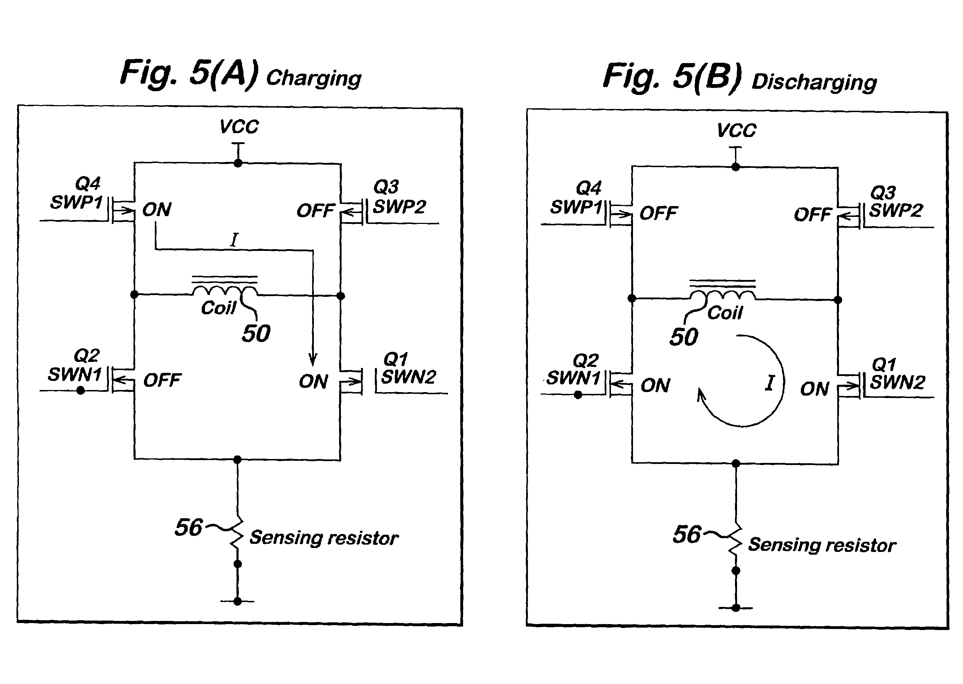

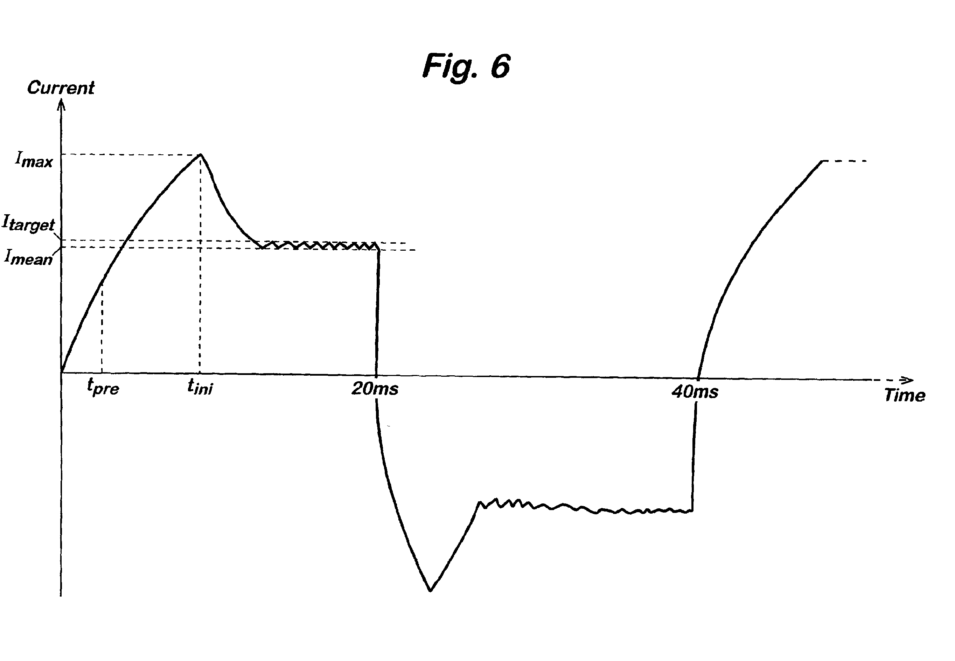

At the start of the initial charging phase, as illustrated in Figure 5(a), for a time period $t_{ini}$ switches SWP1 and SWN2 are closed and switches SWP2 and SWN1 are open to enable the coil 50 to be charged by the supply voltage $V_{cc}$. As illustrated in Figure 6, this enables the current in the coil to increase rapidly to a magnitude $I_{max}$ in order to establish rapidly the magnetic field across the measurement duct 20. For reasons discussed in more detail below, the duration of time period $t_{ini}$ is not fixed, but is determined by measuring the time $t_{pre}$ taken for the current in the coil to reach a predetermined current during the initial charging period, from which the further time required for the current to reach $I_{max}$ can be determined.

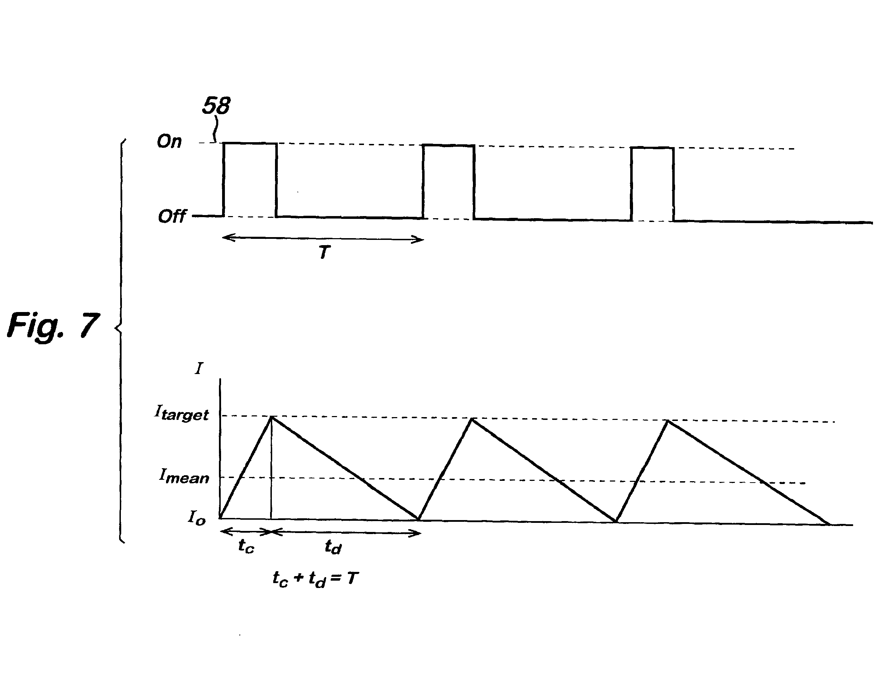

At time $t_{ini}$, the measuring phase commences and a time base 58, illustrated in Figure 7, of frequency 8kHz commences for the duration of the measuring phase. At the start of each period of the time base, switch SWN1 is opened and SWP1 is closed to increase the current in the coil. However, if the current in the coil is greater than $I_{target}$ at the start of a time period, switch SWP1 is immediately opened and switch SWN1 is immediately closed, as illustrated in Figure 5(b), causing the coil 50 to discharge, the current $I$ in the coil decreasing, as shown in Figure 6, from $I_{max}$.

At the end of a 8kHz pulse, SWN1 is opened and SWP1 is closed, and a new charge-discharge cycle begins. The measuring phase settles into a period of repetitive charging and discharging of the coil 50 to maintain the desired mean current level $I_{mean}$ for the remainder of the 20ms cycle. At the end of the cycle, the current is commutated and the cycle repeated.

During one such 8kHz period, as illustrated in Figure 7 the current $I$ in the coil increases with time from an initial current $I_0$ to a fixed upper current threshold $I_{target}$ during time $t_c$. When $I_{target}$ has been reached, switch SWP1 is opened and switch SWN1 is closed so that the current in the coil decreases during time $t_d$ until the start of the next 8kHz pulse. The current in the coil at the end of time $t_d$ is dictated by the rate of discharging, which is determined only by the time constant $\tau$ of the discharging circuit and the difference between $I_0$ and $I_m$. During discharging both SWN1 and SWN2 are turned on to form a near zero voltage difference coil current discharge loop. This minimises the rate of discharge of the coil $I$, thus minimising the variation in the coil current during discharging. As the energy $E$ stored in an electromagnet is given by

$$E = I^2 L/2$$

the energy dissipation during discharge is thus minimised.

The current $I$ in the coil is monitored by the drive circuit 52 by comparing the voltage across the resistor 56 with a reference voltage. This can enable both the duration of the initial charging period, $t_{ini}$, during which the current in the coil increases to $I_{max}$, to be controlled (by controlling the timing of the opening and closing of the switches to end this initial charging period), and the duration of $t_c$, during which the current in the coil increases to $I_{target}$, and thus the mark/space ratio $t_c/t_d$, to be controlled (by controlling the timing of the operation of the switches).

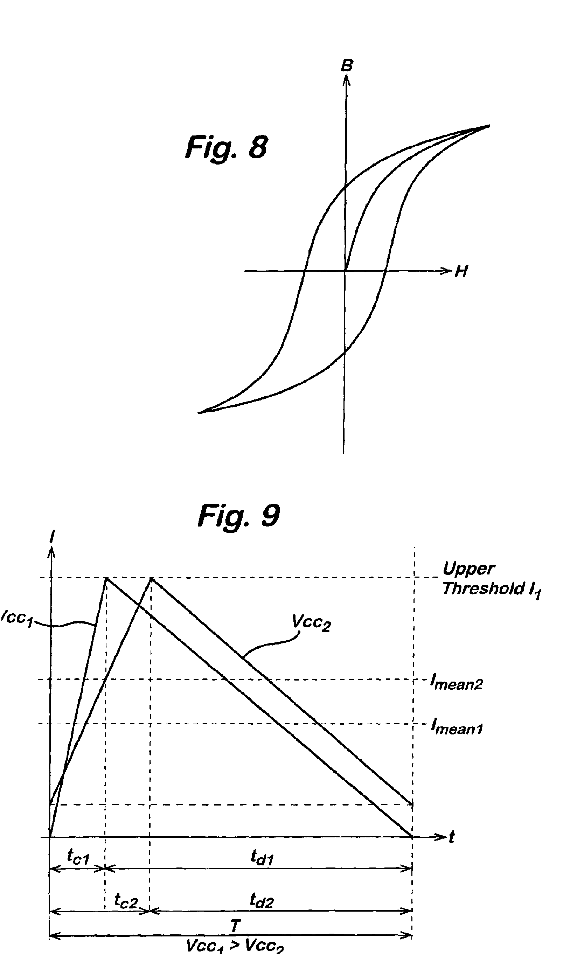

If the flux density $B$ across the measurement duct 20 is measured as the current $I$ in the coil varies, and thus as the intensity of the magnetic field $H$ varies, then a curve of $B$ versus $H$, referred to as a hysteresis loop, can be plotted. Such a curve is illustrated in Figure 8. The maximum value of $H$ reached during the charging process determines the size of the hysteresis loop. Accordingly, the size of the hysteresis loop is determined by $I_{max}$. For a given loop size, the coil operates at a flux density $B$ determined solely by the strength of the magnetic field $H$, or coil current $I$ which generates the magnetic field.

For an electromagnet comprising a coil and a core made of soft magnetic material, as in the preferred embodiment, the operating section of the hysteresis loop can be approximated with a linear relation as given below.

$$B = aH + b$$

where a and b are constants for a straight line. This relation can also be expressed as

$$B = a'I + b'$$

since $H$ is directly proportional to $I$ in the range of concern.

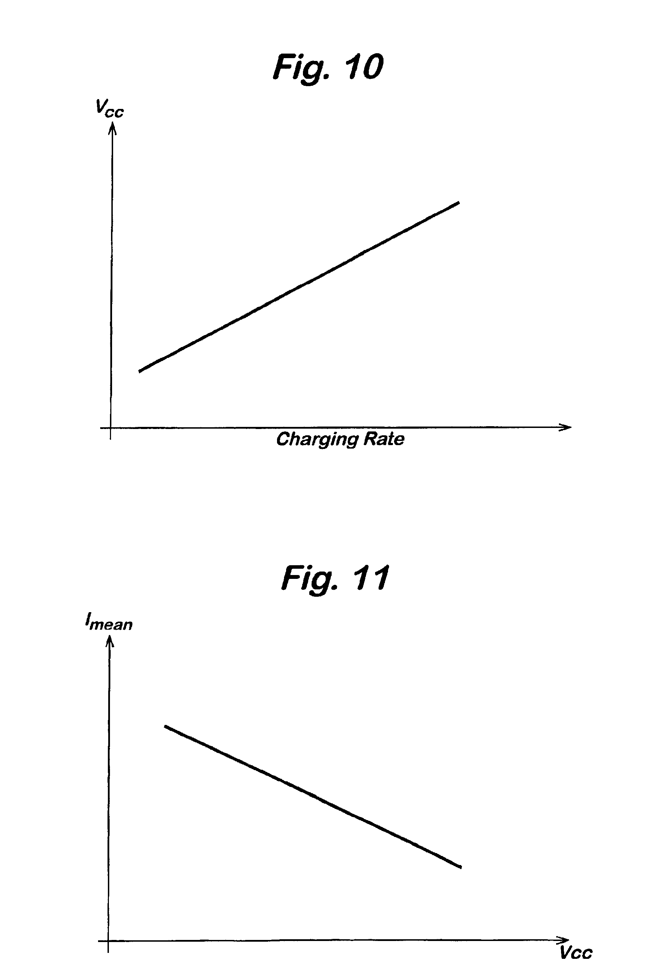

If the voltage $V_{cc}$ decreases from $V_{cc1}$ to $V_{cc2}$, due, for example, to temperature variation or ageing of the battery, the duration $t_c$ of the charging cycle will increase from $t_{c1}$ to $t_{c2}$, as illustrated in figure 9, as it will take longer for the current $I$ in the coil to reach $I_{target}$. Thus, as illustrated in figure 10, the charge rate of the coil 50 will decrease with decreasing $V_{cc}$. Returning to figure 9, a decrease in $V_{cc}$ will cause the mean current $I_{mean}$ in the coil during time period $T$, where $T = t_c + t_d$, to increase from $I_{mean1}$ to $I_{mean2}$, and so, as illustrated in figure 11, the mean current $I_{mean}$ in the coil during time period $T$ will increase with decreasing $V_{cc}$.

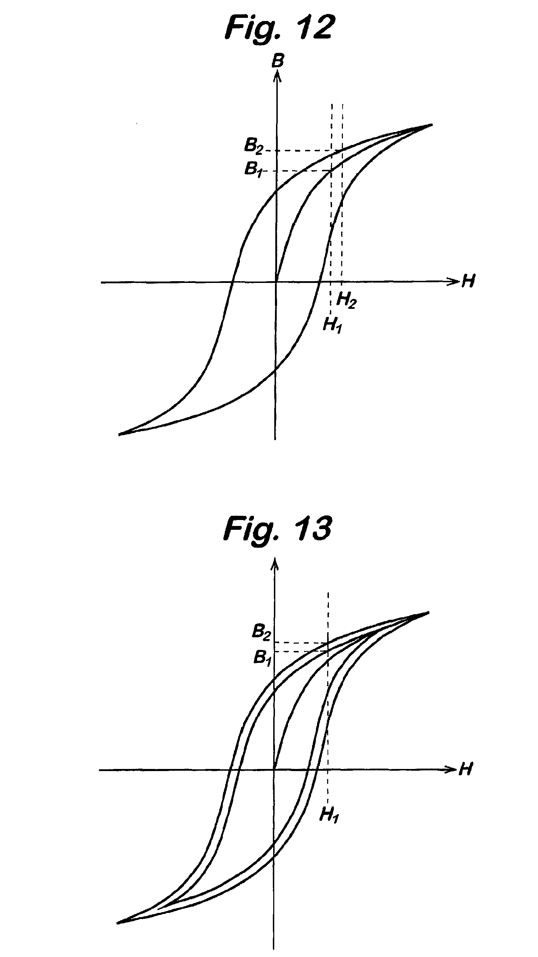

An increase in this mean current $I_{mean}$ will have the effect of increasing the magnetic field $H$ generated by the current flowing in the coil from $H_1$ to $H_2$. As illustrated in figure 12, this will in turn have the effect of increasing the flux density $B$ from $B_1$ to $B_2$. As fluid flows through the measurement duct a voltage is induced in the fluid subjected to the magnetic flux in a direction orthogonal to both the direction of fluid flow and the magnetic flux. The induced voltage $V_s$ is detected by the electrodes disposed in the duct, where $V_s$ is related to the flux density $B$ and the velocity $v$ of fluid flowing in the duct by the expression

$$V_s = S.B.v.d$$

where $d$ is the separation of the electrodes and $S$ is a sensitivity factor dependent upon the geometry of the flow tube. Therefore, the fluctuation in the magnitude of the flux density $B$ from $B_1$ to $B_2$ will alter the calculated flow rate.

An effect of a decrease in $V_{cc}$ is to decrease the rate of increase of the current $I$ at the start of the 20ms cycle. Thus the current $I_{max}$ at the end of a given time period $t_{ini}$ will decrease. As illustrated in figure 13, decreasing the magnitude of $I_{max}$ decreases the size of the hysteresis loop, which, for a constant mean current $I_{mean}$ in the coil during time period $T$, or constant $H$, will decrease the magnitude of the flux density $B$ from $B_2$ to $B_1$.

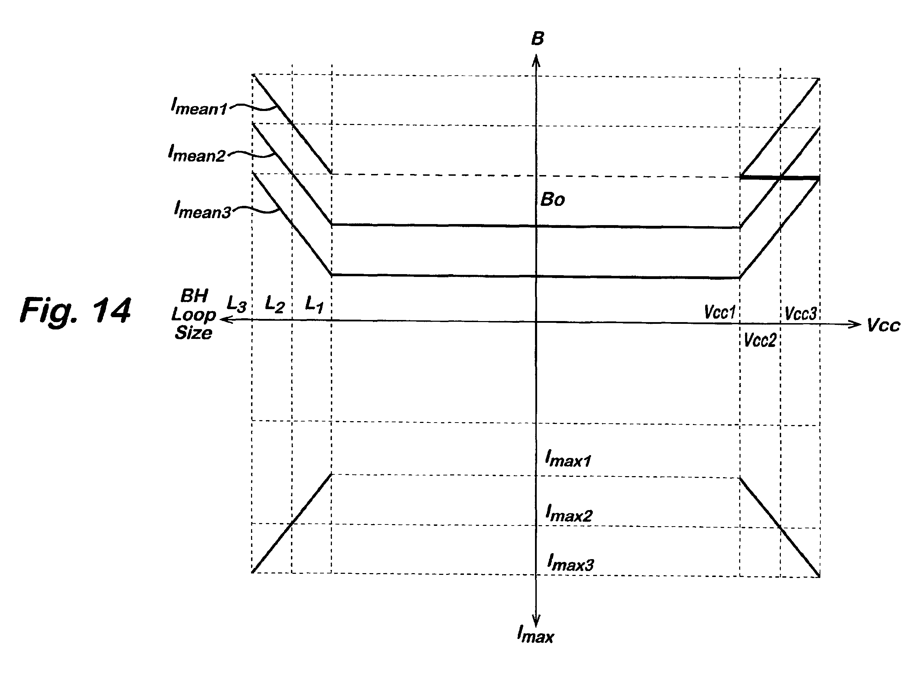

As a consequence, any fluctuation of the flux density $B$ due to fluctuation of the mean current in the coil can be compensated by adjusting the duration of $t_{ini}$ to control $I_{max}$ and thus the size of the hysteresis loop, as illustrated in figure 14; with $V_{cc1} < V_{cc2} < V_{cc3}$, $I_{mean1} > I_{mean2} > I_{mean3}$, and so by selecting $I_{max1} < I_{max2} < I_{max3}$, $L_1 < L_2 < L_3$ so as to keep the flux density B at a constant level. Thus, for electromagnets with a known mean coil current and power supply voltage relation, the flux density can be maintained constant for a varying supply voltage by controlling $t_{ini}$ in such a manner that variations in $B$ due to changes in $I_{mean}$ and the size of the hysteresis loop cancel each other out. One method of controlling $t_{ini}$ is to measure the time, $t_{pre}$, taken for the current in the coil to reach a predetermined current, for example, $I_{target}$, during the initial charging period, as shown in Figure 6, from which the further time required for the current to reach $I_{max}$ can be determined from the known $I$-$t$ relationship already mentioned.

Operation of the H-bridge circuit 54 to cyclically charge and discharge the coil 50 will now be described. As discussed above, during charging, as illustrated in Figure 5(a), switch SWN2 is closed, switches SWP2 and SWN1 are open and switch SWP1 is sequentially closed and opened to enable the coil 50 to be charged by the supply voltage $V_{cc}$. During discharging, as illustrated in Figure 5(b) switches SWP1 and SWP2 are open and switches SWN1 and SWN2 are closed to enable the coil 50 to be discharged through a closed loop formed by the coil 50 and switches SWN1, SWN2. In order to suppress voltage fluctuations when switching between charging and discharging, the sequence of opening and closing the switches of the H-bridge circuit 54 is such that:

(i) the change of voltage across the coil is minimised;

(ii) if a number of switches are required to be switched on (closed) then switched off (opened), the timing should be "first on last off"; and

(iii) if a number of switches are required to be switched off or switched on. the timing should be "off first then on".

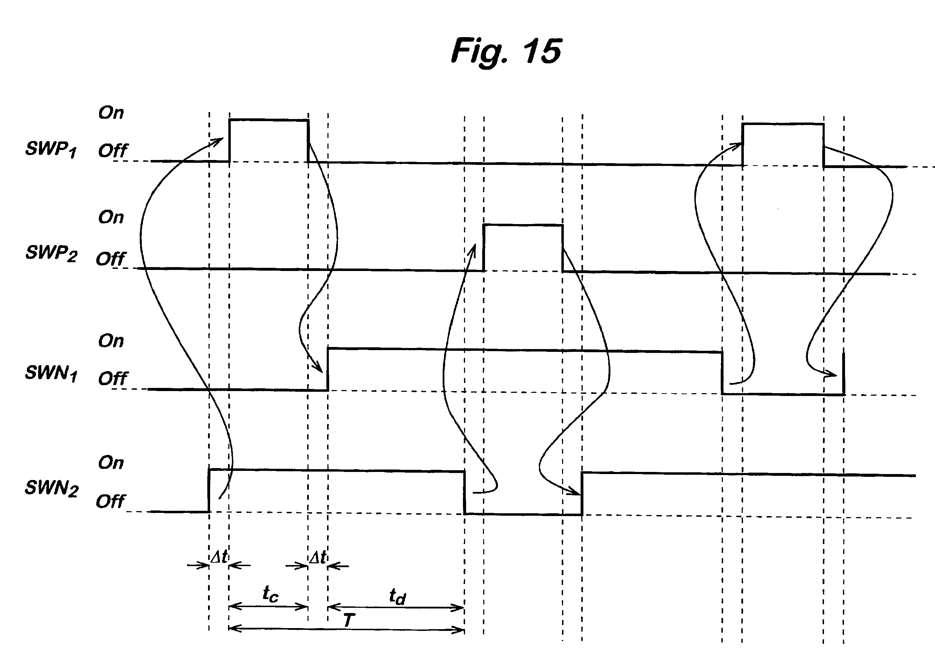

For example, in the above sequence of operating switches SWP1, SWP2, SWN1 and SWN2, switch SWP1 is switched off before switch SWN1 is switched on. This is illustrated in Figure 15. To commutate the current in the coil, switch SWN2 is switched off before switch SWP2 is switched on.

The meter 10 is capable of implementing different priorities of fluid supply, for example, priorities A, B, C, and D, related to the expected demand. A day is notionally divided into 48 half hour periods, each period being assigned a respective priority. For example, the periods between 12.00am and 4.00am, when fluid consumption is expected to be low, may be assigned a low priority A, whilst the periods between 7.00am and 10.00am, when consumption is expected to be high, may be assigned a high priority D. The meter 10 includes a totaliser for each period to store, for each priority, the total amount of fluid used by each consumer during the time periods allocated that priority. The number of priorities can vary both up and down depending on the complexity with which fluid consumption is to be monitored. However, the number of totalisers can only increase so as to preserve readings from any totalisers no longer in use.

The stored amounts of fluid respectively used by a group of individually metered consumers are periodically monitored to determine for each priority the cumulative amount of fluid used from the mains supply by all of those consumers during the time periods allocated that priority. This enables, for each priority, the cumulative amount to be compared to the actual amount of fluid drawn by the group (as measured by a single upstream meter) from the mains supply during the time periods allocated that priority to detect the presence of a leak of fluid from the mains supply. The presence of a leak of fluid from the mains supply can be detected when there is a consistent difference between the cumulative amount and the actual amount, and is confirmed when the difference between said cumulative amount and said actual amount is approximately the same for each priority. This can provide an accurate method of monitoring for the presence of leaks, as a difference between the actual amount and the cumulative amount for periods allocated a low priority, that is, priority A, can provide a clear indication of the presence of a leak from the supply.

Different priorities may be accorded the same tariff level. For example, priority A may be accorded a first, lower tariff, whilst priorities B, C and D may be accorded a second higher tariff. If so, the meter can be adapted to display to the user two cumulative amounts for each tariff level only. For example, if the consumption is such that 5 "units" (for example, cubic meters) of fluid have been consumed during time periods having priority A, in short A=5, and B=6, C=7 and D=8, the meter displays A=5 and B=21 (that is, 6 + 7 + 8). The user is therefore not aware that the second tariff level has been subdivided into different priorities to enable the variation in fluid consumption to be monitored more accurately.

If a higher tariff is then to be accorded to time periods allocated priorities C and D, the display would change to A=5, B=21 and C=0, with the sum of the amount of fluid consumed during periods allocated priorities C and D added together on the display.

In summary, a manifold-type flow meter comprises means for supplying a flow of fluid diverted from a mains supply to first fluid conveying means for conveying a streamlined flow of fluid to a flow measurement duct, means for generating a magnetic field across the duct, means for deriving a flow measurement from the voltage induced by said magnetic field in the fluid, and second fluid conveying means for conveying fluid from the measurement duct back to the mains supply. As the meter includes no moving parts, the lifetime of the meter can be significantly longer than that of a displacement meter having an oscillating piston.

Each feature disclosed in the description, and/ or the claims and drawings may be provided independently or in any appropriate combination. In particular a feature of a subsidiary claim may be incorporated in a claim for which it is not dependent.

## Claims

1. A flow meter comprising first fluid conveying means for receiving a flow of fluid from a manifold connector disposed in a mains supply pipe through an inlet, and delivering the flow to a flow measurement duct, means for generating a magnetic field across the duct, means for deriving a flow measurement from a voltage induced by said magnetic field across the fluid, or a quantity indicative of said voltage, and second fluid conveying means for conveying fluid from the measurement duct back to the manifold connector through an outlet adjacent said inlet.

2. A flow meter according to Claim 1, wherein the first conveying means reverses the direction of flow of the fluid.

3. A flow meter according to Claim 1 or Claim 2 wherein the first conveying means is configured to deliver the flow substantially cavitation-free to the flow measurement duct.

4. A flow meter according to any preceding claim, comprising an annular inlet chamber for receiving the flow of fluid from the manifold connector and supplying the flow of fluid to the first conveying means.

5. A flow meter according to Claim 4, wherein said second conveying means passes through said inlet chamber to return fluid to the manifold connector.

6. A flow meter according to Claim 4 or Claim 5, wherein the annular inlet chamber comprises guide means for guiding the flow of fluid towards said first conveying means so as to reduce turbulence in the inlet chamber.

7. A flow meter according to Claim 6, wherein said guide means comprises a fin projecting from the internal wall of said chamber opposite the first fluid conveying means..

8. A flow meter according to Claim 6 or Claim 7, wherein the internal wall of the inlet chamber is chamfered to guide the flow of fluid towards said first fluid conveying means.

9. A flow meter according to any of Claims 2 to 8, wherein said first conveying means comprises a substantially U-shaped tube.

10. A flow meter according to Claim 9, wherein the U-shaped tube is of substantially constant cross-sectional area.

11. A flow meter according to any preceding claim, comprising means for mounting the meter on the manifold connector so that the flow axis of the flow measurement duct is substantially orthogonal to the longitudinal extent of the mains supply pipe.

12. A flow meter according to any preceding claim, comprising an upstream convergent Venturi portion for channelling the flow of fluid into the flow measurement duct, the convergent portion being of length sufficient to suppress cavitation occurring upstream in the first fluid conveying means.

13. A flow meter according to Claim 12, wherein the second fluid conveying means comprises a divergent Venturi portion for receiving the flow of fluid from said flow measurement duct, said upstream convergent portion being substantially longer than said downstream divergent portion.

14. A flow meter according to Claim 12 or 13, wherein said upstream convergent portion is approximately three times longer than said downstream divergent portion.

15. A flow meter according to any preceding claim, wherein said flow measurement duct is of substantially rectangular cross-section.

16. A flow meter for mounting on a manifold connector in a supply pipe, the meter comprising an annular inlet portion for receiving a flow of fluid from the manifold connector, a conduit including a U-tube connecting the inlet portion to an elongate convergent Venturi section, a flow measurement section, means for inferentially measuring a flow of fluid through the measurement section, and a divergent Venturi section for receiving the flow of fluid from the measurement section and returning it to the manifold connector via an outlet portion disposed within the annular inlet portion.

17. A flow meter according to Claim 16, wherein the conduit is of substantially constant flow area.

18. A flow meter according to Claim 16 or Claim 17, wherein the outlet portion is divergent in the direction of flow.

19. A flow meter according to any of Claims 16 to 18, wherein the inferential measuring means comprises means for generating a magnetic field across the measurement section and means for deriving a flow measurement from a voltage induced by said magnetic field across the fluid, or a quantity indicative of said voltage.

20. A flow meter according to any preceding claim, comprising a lower housing configured for mounting on the manifold connector by rotation relative thereto and an upper housing slidably removable from the lower housing and connected thereto by structure capable of transmitting torque to the lower housing for rotating the lower housing.

21. A flow meter according to any of Claims 1 to 15 or 19, wherein the generating means comprises a coil, charging means for charging the coil from an unregulated energy supply to generate said magnetic field, and charging control means for adjusting the charging of the coil in response to variations in the energy supply so as to maintain the magnitude of magnetic flux density across the duct substantially constant during measurement of the flow.

22. A flow meter comprising a flow measurement duct, generating means for generating a magnetic field across the duct, and means for deriving a flow measurement from a voltage induced in fluid flowing in the duct, or a quantity indicative thereof, wherein the generating means comprises a coil, charging means for charging the coil from an unregulated energy supply to generate said magnetic field, and charging control means for adjusting the charging of the coil in response to variations in the energy supply so as to maintain the magnitude of magnetic flux density across the duct substantially constant during measurement of the flow.

23. A flow meter according to Claim 21 or Claim 22, wherein said charging control means is arranged to adjust the charging of the coil from the energy supply so as to control the size of the hysteresis loop generated as the coil is charged.

24. A flow meter according to Claim 23, wherein the charging control means is arranged to control the size of the hysteresis loop by controlling the magnitude of the maximum current in the coil during charging thereof.

25. A flow meter according to Claim 24, wherein the charging control means is arranged to measure the time taken, during charging, for the current in the coil to reach a predetermined level, and to control the remainder of the charging time in order to control the magnitude of the maximum current in the coil.

26. A flow meter according to any of Claims 21 to 25, wherein the charging control means is arranged to control said charging means so that, during an initial charging period, the coil is continuously charged from the energy supply and, during a subsequent measuring period, the coil is intermittently charged from the energy supply.

27. A flow meter according to any of Claims 21 to 26, wherein the charging means comprises a switching circuit having a plurality of switches, said charging control means being arranged to control the sequence of operating said switches.

28. A flow meter according to any of Claims 21 to 27, comprising a battery for charging said coil.

29. A flow meter according to any of Claims 21 to 28, wherein said charging control means is arranged to control said charging means to commutate the current supplied to the coil to generate the magnetic field in alternating directions.

30. A flow meter according to Claim 29, wherein the charging means comprises a switching circuit having a plurality of switches, said charging control means being arranged to control the sequence of operating said switches so as to suppress voltage fluctuation across the coil during commutation.

31. A flow meter comprising a flow measurement duct, generating means for generating a magnetic field across the duct, and means for deriving a flow measurement from a voltage induced in fluid flowing in the duct, or a quantity indicative thereof, wherein the generating means comprises a coil, charging means for charging the coil from an energy supply to generate said magnetic field, and charging control means for controlling said charging means, wherein said charging means comprises a switching circuit having a plurality of switches and said charging control means is arranged to control the sequence of operating said switches so as to suppress voltage fluctuation across the coil during commutation.

32. A flow meter according to Claim 30 or Claim 31, wherein when a first of said switches is to be opened and a second of said switches is to be closed substantially simultaneously, said charging control means is arranged to open said first switch before closing said second switch.

33. A flow meter according to any of Claims 30 to 32, wherein when a plurality of switches are to be opened substantially simultaneously, said charging control means is arranged to open first the last of those switches to have been closed.

34. A flow meter according to any of Claims 30 to 33, wherein the charging control means is arranged to control the sequence of operating said switches such that the coil is sequentially charged from the energy supply and discharged in isolation from the energy supply.

**35.** A flow meter according to Claim 34, wherein said charging control means is arranged to control the sequence of operating said switches such that the coil is discharged through a loop comprising a plurality of closed switches.

**36.** A flow meter comprising a flow measurement duct, generating means for generating a magnetic field across the duct, and means for deriving a flow measurement from a voltage induced in fluid flowing in the duct, or a quantity indicative thereof, wherein the generating means comprises a coil, charging means for charging the coil from an energy supply to generate said magnetic field, and charging control means for controlling said charging means, wherein said charging means comprises a switching circuit having a plurality of switches and said charging control means is arranged to control the sequence of operating said switches so the coil is sequentially charged from the energy supply and discharged in isolation from the energy supply through a loop comprising a plurality of closed switches.

**37.** A flow meter according to any of Claims 30 to 36, wherein said switching circuit is an H-bridge circuit, one of said switches being located on each arm of the circuit.

**38.** A method of detecting the presence of a leak of fluid from a mains supply, comprising the steps of:

measuring the amount of fluid used by each of a plurality of consumers during a time period;
measuring the actual amount of fluid drawn from the fluid supply during that time period; and
comparing the sum of the measured amounts of fluid used by the plurality of consumers to the actual amount of fluid drawn from the mains supply during that time period to determine whether there is a leak of fluid from the mains supply.

**39.** A method according to Claim 38, comprising the steps of:

allocating to each of a plurality of consecutive time periods one of a plurality of priorities;
storing, for each priority, the total amount of fluid used by each consumer during the time periods allocated that priority;
monitoring the stored amounts of fluid used by the consumers to determine for each priority the sum of the amounts of fluid used from the mains supply by all of the consumers during the time periods allocated that priority; and
comparing, for at least one priority, the sum of the amounts to the actual amount of fluid drawn from the mains supply during the time periods allocated that priority to detect the presence of a leak of fluid from the mains supply.

## Fig. 1

# Fig. 2

# Fig. 3

42

**Lid (Cover)**

**Lower Body**

# Fig. 4

Switching Circuit

VCC

Q4
SWP1

Q3
SWP2

COIL DRIVER

Coil

50

52

Q2
SWN1

Q1
SWN2

54

56 Sensing resistor

EP 1 260 797 A2

**Fig. 5(A)** Charging

**Fig. 5(B)** Discharging

EP 1 260 797 A2

**Fig. 6**

EP 1 260 797 A2

Fig. 7

*Fig. 8*

*Fig. 9*

## Fig. 10

## Fig. 11

# *Fig. 12*

# *Fig. 13*

Fig. 14

EP 1 260 797 A2

*Fig. 15*

$SWP_1$ On Off

$SWP_2$ On Off

$SWN_1$ On Off

$SWN_2$ On Off

$t_c$ $\Delta t$ $t_d$ $T$